(19) Europäisches Patentamt
European Patent Office
Office européen des brevets

(11) **EP 1 173 943 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(21) Anmeldenummer: **00909187.7**

(22) Anmeldetag: **16.02.2000**

(51) Int Cl.:
*H04J 13/00* (2006.01)   *H04L 7/04* (2006.01)
*H04B 1/707* (2006.01)   *H04B 7/26* (2006.01)

(86) Internationale Anmeldenummer:
**PCT/EP2000/001263**

(87) Internationale Veröffentlichungsnummer:
**WO 2000/067405 (09.11.2000 Gazette 2000/45)**

(54) **VERFAHREN ZUR BILDUNG BZW. ERMITTLUNG EINER SYNCHRONISATIONSFOLGE, VERFAHREN ZUR SYNCHRONISATION, SENDEEINHEIT UND EMPFANGSEINHEIT**

METHOD OF GENERATING AND/OR DETECTING SYNCHRONIZATION SEQUENCES, SYNCHRONIZATION METHOD, TRANSMITTER UNIT AND RECEIVER UNIT

PROCEDE POUR FORMER ET POUR DETERMINER UNE SEQUENCE DE SYNCHRONISATION, PROCEDE DE SYNCHRONISATION, UNITE D'EMISSION ET UNITE DE RECEPTION

(84) Benannte Vertragsstaaten:
**DE FR GB IT**

(30) Priorität: **29.04.1999 DE 19919545**
**18.05.1999 EP 99109791**

(43) Veröffentlichungstag der Anmeldung:
**23.01.2002 Patentblatt 2002/04**

(73) Patentinhaber: **SIEMENS AKTIENGESELLSCHAFT**
**80333 München (DE)**

(72) Erfinder:
• **RAAF, Bernhard**
  **D-81475 München (DE)**
• **MICHEL, Jürgen**
  **D-80634 München (DE)**

(56) Entgegenhaltungen:
**WO-A-00/14915   WO-A-96/39749**

• **SRDJAN BUDISIN: "GOLAY COMPLEMENTARY SEQUENCES ARE SUPERIOR TO PN SEQUENCES" PROCEEDINGS OF THE INTERNATIONAL CONFERENCE ON SYSTEMS ENGINEERING,US,NEW YORK, IEEE, Bd. -, 1992, Seiten 101-104, XP000319401 ISBN: 0-7803-0734-8**
• **BUDISIN S Z: "NEW COMPLEMENTARY PAIRS OF SEQUENCES" ELECTRONICS LETTERS,GB, IEE STEVENAGE, Bd. 26, Nr. 13, 21. Juni 1990 (1990-06-21), Seiten 881-883, XP000107922 ISSN: 0013-5194**
• **MASKARA S L ET AL: "CONCATENATED SEQUENCES FOR SPREAD SPECTRUM SYSTEMS" IEEE TRANSACTIONS ON AEROSPACE AND ELECTRONIC SYSTEMS,US, IEEE INC. NEW YORK, Bd. AES-17, Nr. 3, Mai 1981 (1981-05), Seiten 342-350, XP000791008 ISSN: 0018-9251**

**Beschreibung**

Die Erfindung betrifft ein Verfahren zur Synchronisation einer Basisstation mit einer Mobilstation, eine Basisstation und eine Mobilstation.

Bei Signalübertragungssystemen, wie beispielsweise Mobilfunksystemen, ist es erforderlich, daß einer der Kommunikationspartner (erste Übertragungseinheit) bestimmte festgelegte Signale erkennt, die von einem anderen Kommunikationspartner (zweite Übertragungseinheit) ausgesandt werden. Dabei kann es sich beispielsweise um sogenannte Synchronisations-Bursts (Synchronisations-Funkblöcke) zur Synchronisation zweier Synchronisationspartner, wie beispielsweise Funkstationen, oder um sogenannte Access-Bursts handeln.

Um derartige Empfangssignale gegenüber dem Umgebungsrauschen zuverlässig zu erfassen bzw. zu identifizieren, ist es bekannt, das Empfangssignal fortlaufend über eine festgelegte Zeitdauer mit einer vorgegebenen Synchronisationsfolge zu korrelieren und die Korrelationssumme über die Zeitdauer der vorgegebenen Synchronisationsfolge zu bilden. Der Bereich des Empfangssignals, der eine maximale Korrelationssumme ergibt, entspricht dem gesuchten Signal. Dem Synchronisationssignal von der Basisstation eines digitalen Mobilfunksystems ist beispielsweise eine Synchronisationsfolge als sogenannte Trainingssequenz vorgeschaltet, die auf die eben beschriebene weise in der Mobilstation durch Korrelation mit der abgespeicherten Synchronisationsfolge erfaßt oder ermittelt wird. So können die Mobilstationen mit der Basisstation synchronisiert werden.

Auch in der Basisstation sind derartige Korrelationsberechnungen beispielsweise bei der Random-Access-Channel (RACH)-Detektion erforderlich. Außerdem wird eine Korrelationsberechnung auch zur Bestimmung der Kanalimpulsantwort und der Signallaufzeiten empfangener Signalbursts durchgeführt.

Die Korrelationssumme wird dabei wie folgt berechnet:

$$Sm = \sum_{i=0}^{n-1} E(i+m) * K(i)$$

wobei E(i) eine aus dem Empfangssignal abgeleitete Empfangssignalfolge und K(i) die vorgegebene Synchronisationsfolge ist, wobei i von 0 bis n-1 läuft. Die Korrelationssumme Sm wird aufeinanderfolgend für mehrere zeitlich versetzte, aus dem Empfangssignal gewonnene Signalfolgen E(i) berechnet, und dann der maximale Wert von Sm bestimmt. Sollen k aufeinanderfolgende Korrelationssummen berechnet werden, so beträgt der Berechnungsaufwand k * n Operationen, wobei eine Multiplikation und Addition zusammen als eine Operation gezählt wird.

Die Berechnung der Korrelationssummen ist daher sehr aufwendig und erfordert, insbesondere bei Real-Time-Anwendungen wie Sprachkommunikation oder Bildtelefonie oder in CDMA-Systemen, leistungsfähige und daher teure Prozessoren, die bei der Berechnung einen hohen Stromverbrauch aufweisen. Beispielsweise ist zur Synchronisation des sich in der Standardisierung befindlichen UMTS-Mobilfunksystems eine bekannte Synchronisationsfolge der Länge 256 Chips (bei CDMA wird ein übertragenes Bit auch Chip genannt) zu ermitteln. Die Folge wird alle 2560 Chips wiederholt. Da die Mobilstation anfangs asynchron zum Chiptakt arbeitet, muß das Empfangssignal überabgetastet werden, um auch bei ungünstiger Abtastlage noch ein ausreichendes Signal zu erhalten. Dies führt aufgrund der Abtastung der I- und Q-Komponente zu 256*2560*2*2 = 2621440 Operationen.

Aus der WO 96 39749 A ist es bekannt, eine Synchronisationsfolge zu übertragen, wobei ein chip der Folge selbst eine Folge ist.

Aus "Srdjan Budisin: Golay Complementary Sequences are Superior to PN Sequences, Proceedings of the International Conference on Systems Engineering, US, New York, IEEE, Bd.-,1992, Seiten 101-104, XP 000319401 ISBN: 0-7803-0734-8" ist es bekannt, als Alternative zu PN-Folgen Golaysequenzen zu verwenden.

Aus Budisin S Z: "New Complementary Pairs of Sequences", Electronics Letters, GB, IEE Stevenage, Bd 26, Nr13, 21 Juni 1990, Seiten 881-883 sind Regeln für die rekursive Bildung von Paaren komplemtärer Golaysequenzen bekannt. Dabei werden die Sequenzen anhand der Kroneckerschen Deltafunktion sowie Permutationen und Einheitsgrößen generiert.

Aus der WO-A-0014915 (Stand der Technik gemäß Art. 54(3) EPÜ) ist die Bildung bestimmter hierarchischer Korrelationsfolgen bekannt.

Der Erfindung liegt die Aufgabe zugrunde, Verfahren zur Synchronisation einer Basisstation mit einer Mobilstation, eine Basisstation und eine Mobilstation anzugeben, die eine zuverlässige und aufwandsgünstige Synchronisation einer Basisstation mit einer Mobilstation ermöglichen.

Gelöst wird die Aufgabe durch die Merkmale der unabhängigen Patentansprüche. Weiterbildungen sind den Unteransprüchen zu entnehmen.

Die Erfindung beruht dabei zunächst auf dem Gedanken, eine sogenannte "hierarchische Folge", insbesondere hierarchische Synchronisationsfolge y(i), zu bilden, welche gemäß folgender Beziehung auf einer ersten konstituierenden Folge x1 der Länge n1 und einer zweiten konstituierenden Folge x2 der Länge n2 basiert:

$$y(i) = x_2(i \bmod n_2) * x_1(i \operatorname{div} n_2) \text{ für } i = 0 \ldots (n_1 * n_2) - 1.$$

Dieses Konstruktionsprinzip einer hierarchischen Synchronisationsfolge sieht eine Wiederholung einer konstituierenden Folge in ihrer vollen Länge vor, wobei die Wiederholungen mit dem Wert des entsprechenden Elements der zweiten konstituierenden Folge moduliert wird. Dadurch können Synchronisationsfolgen gebildet werden, die, wenn sie in einer Empfangssignalfolge enthalten sind, leicht ermittelt werden können. Derartige Synchronisationsfolgen weisen gute Korrelationseigenschaften auf und ermöglichen eine effiziente Berechnung der Korrelation in einer Mobilstation. Dies konnte durch aufwendige eigens für diesen Zweck geschaffene Simulationswerkzeuge gezeigt werden.

Ferner basiert die Erfindung auf der Erkenntnis, daß bei der Verwendung einer hierarchischen Folge als Synchronisationsfolge, die auf zwei konstituierenden Folgen basiert, empfangsseitig eine weitere Verringerung der Komplexität erzielbar ist, wenn es sich bei zumindest einer konstituierenden Folge selbst um eine hierarchische Folge handelt.

Hierbei ist vorgesehen, daß nur eine Wiederholung der ersten Hälfte (oder eines anderen Teils) der ersten konstituierenden Folge durchgeführt wird, worauf die zweite Hälfte und ihre Wiederholungen folgen. Die Wiederholungen werden wieder mit dem Wert des entsprechenden Elements der zweiten konstituierenden Folge moduliert. Es wird ein Parameter s eingeführt, der den Teil der konstituierenden Folge angibt, der als ein zusammenhängendes Stück wiederholt wird. Die diesen weitergebildeten verallgemeinerten Ansatz zur Bildung "verallgemeinerter hierarchischer Folgen" beschreibende Formel lautet:

$$x_1(i) = x_4(i \bmod s + s \cdot (i \operatorname{div} sn_3)) \cdot x_3((i \operatorname{div} s) \bmod n_3), \text{ für}$$
$$i = 0 \ldots n_3 \cdot n_4 - 1$$

Für $s = n_4$ ist diese Beziehung zur Beschreibung "verallgemeinerter hierarchischer Folgen" äquivalent zur oben erläuterten Beziehung zur Bildung "hierarchischer Synchronisationsfolgen".

Im Rahmen der vorliegenden Anmeldung werden "konstituierende Folgen" auch als "Signalteilfolgen", als K1 bzw. K2 oder als x1 bzw. $x_1$ oder als x2 bzw. $x_2$ bezeichnet; "Synchronisationsfolgen" oder "Synchronisationscodes" werden auch als "y(i)" oder "K(i)" bezeichnet. Unter "Ermittlung einer Synchronisationsfolge" versteht man natürlich auch die Ermittlung der zeitlichen Lage einer Synchronisationsfolge. Unter "Empfangssignalfolge" versteht man auch eine Signalfolge, die beispielsweise durch eine Demodulation, Filterung, Derotation, Skalierung oder Analog-/Digitalwandlung aus einem empfangenen Signal abgeleitet wurde.

Eine Weiterbildung der Erfindung basiert auf der Erkenntnis, daß bei der Verwendung einer hierarchischen Folge als Synchronisationsfolge, die auf zwei konstituierenden Folgen basiert, wobei es sich bei zumindest einer konstituierenden Folge um eine Golayfolge handelt, empfangsseitig eine weitere Verringerung der Komplexität erzielbar ist.

Durch aufwendige Simulationen konnten Parameter zur Beschreibung von Golayfolgen, welche sich als konstituierende Folgen besonders gut eignen, gefunden werden.

Spezielle Ausgestaltungen der Erfindung sehen vor, zur Bildung einer hierarchischen 256-Chip-Folge, insbesondere einer Synchronisationsfolge, konstituierende Folgen der Länge 16 zu verwenden, wobei es sich bei einer ersten konstituierenden Folge um eine Golayfolge handelt und bei einer zweiten konstituierenden Folge um eine verallgemeinerte hierarchische Folge handelt, deren konstituierende Folgen auf zwei Golayfolgen (der Länge 4) basieren.

Beispielsweise wird $x_2$ als die Golayfolge der Länge 16 definiert, die durch die Delaymatrix $D^2 = [8, 4, 1, 2]$ und die Gewichtsmatrix $W^2 = [1, -1, 1, 1]$ gewonnen wird. $x_1$ ist eine verallgemeinerte hierarchische Folge, wobei s=2 ist und die beiden Golayfolgen $x_3$ und $x_4$ als konstituierende Folgen verwendet werden. $x_3$ und $x_4$ sind identisch und als Golayfolgen der Länge 4 definiert, die durch die Delaymatrix $D^3 = D^4 = [1, 2]$ und die Gewichtsmatrix $W^3 = W^4 = [1, 1]$ beschrieben werden.

Eine Golayfolge aN, auch als Golaysequenz oder Golay Complementary Sequence bezeichnet, ist dabei durch folgende Beziehung bildbar:

$$a_0(k) = \delta(k) \text{ und } b_0(k) = \delta(k)$$

.

$$a_n(k) = a_{n-1}(k) + W_n \cdot b_{n-1}(k-D_n),$$

$$b_n(k) = a_{n-1}(k) - W_n \cdot b_{n-1}(k-D_n),$$

$$k = 0, 1, 2, \ldots, 2^N,$$

$$n = 1, 2, \ldots, N.$$

$\delta(k)$ Kroneckersche Deltafunktion

D Delaymatrix

W Gewichtsmatrix

Im folgenden wird die Erfindung anhand verschiedener Ausführungsbeispiele näher beschrieben, zu deren Erläuterung die nachfolgend aufgelisteten Figuren dienen:

Figur 1                schematische Darstellung eines Mobilfunknetzes;

Figur 2                Blockschaltbild einer Funkstation;

Figur 3                herkömmliches Verfahren zur Berechnung von Korrelationssummen;

Figuren 9, 5, 6, 7 und 8    Blockschaltbilder effizienter Golay-Korrelatoren;

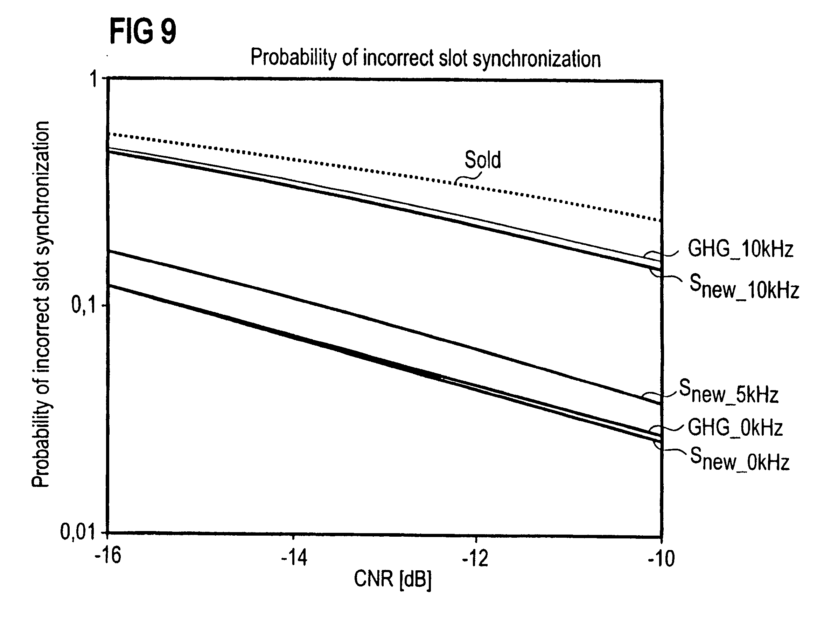

Figur 9                Diagramm mit Simulationsergebnissen.

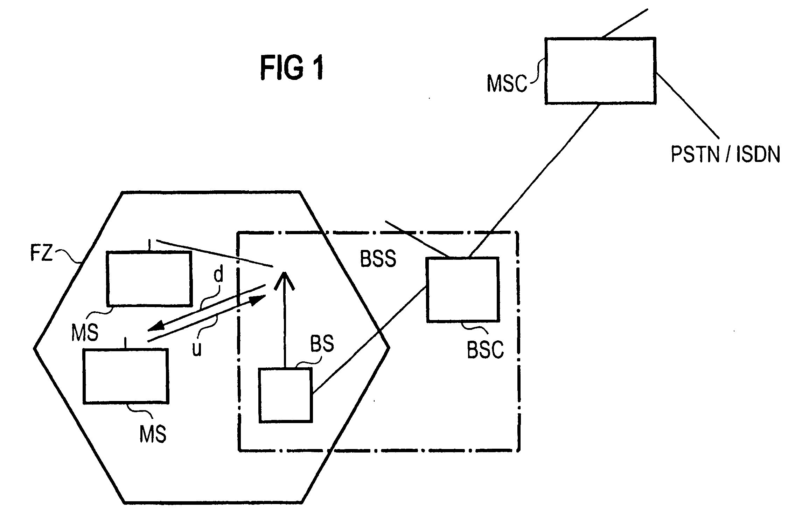

In Figur 1 ist ein zellulares Mobilfunknetz, wie beispielsweise das GSM (Global System for Mobile Communication)-System dargestellt, das aus einer Vielzahl von Mobilvermittlungsstellen MSC besteht, die untereinander vernetzt sind, bzw. den Zugang zu einem Festnetz PSTN/ISDN herstellen. Ferner sind diese Mobilvermittlungsstellen MSC mit jeweils zumindest einem Basisstationscontroller BSC verbunden, der auch durch ein Datenverarbeitungssystem gebildet sein kann. Eine ähnliche Architektur findet sich auch in einem UMTS (Universal Mobile Telecommunication System).

Jeder Basisstationscontroller BSC ist wiederum mit zumindest einer Basisstation BS verbunden. Eine solche Basisstation BS ist eine Funkstation, die über eine Funkschnittstelle eine Funkverbindung zu anderen Funkstationen, sogenannten Mobilstationen MS aufbauen kann. Zwischen den Mobilstationen MS und der diesen Mobilstationen MS zugeordneten Basisstation BS können mittels Funksignalen Informationen innerhalb von Funkkanälen f die innerhalb von Frequenzbändern b liegen, übertragen werden. Die Reichweite der Funksignale einer Basisstation definieren im wesentlichen eine Funkzelle FZ.

Basisstationen BS und ein Basisstatiorიscontroller BSC können zu einem Basisstationssystem BSS zusammengefaßt werden. Das Basisstationssystem BSS ist dabei auch für die Funkkanalverwaltung bzw. -zuteilung, die Datenratenanpaßung, die Überwachung der Funkübertragungsstrecke, Hand-Over-Prozeduren, und im Falle eines CDMA-Systems für die Zuteilung der zu verwendenden Spreizcodesets, zuständig und übermittelt die dazu nötigen Signalisierungsinformationen zu den Mobilstationen MS.

Im Falle eines Duplex-Systems können bei FDD (Frequency Division Duplex)-Systemen, wie dem GSM-System, für den Uplink u (Mobilstation (Sendeeinheit) zur Basisstation (Empfangseinheit)) andere Frequenzbänder vorgesehen sein als für den Downlink d (Basisstation (Sendeeinheit) zur Mobilstation (Empfangseinheit)). Innerhalb der unterschiedlichen Frequenzbänder b können durch ein FDMA (Frequency Division Multiple Access) Verfahren mehrere Frequenzkanäle f realisiert werden.

Im Rahmen der vorliegenden Anmeldung versteht man unter Übertragungseinheit auch Kommunikationseinheit, Sendeeinheit, Empfangseinheit, Kommunikationsendgerät, Funkstation, Mobilstation oder Basisstation. Im Rahmen dieser Anmeldung verwendete Begriffe und Beispiele beziehen sich auch oft auf ein GSM-Mobilfunksystem; sie sind jedoch keineswegs darauf beschränkt, sondern können anhand der Beschreibung von einem Fachmann auch leicht auf andere, gegebenenfalls zukünftige, Mobilfunksysteme, wie CDMA-Systeme, insbesondere Wide-Band-CDMA-Systeme abgebildet werden.

Mittels Vielfachzugriffsverfahren können Daten über eine Funkschnittstelle effizient übertragen, separiert und einer oder mehreren bestimmten Verbindungen bzw. dem entsprechenden Teilnehmer zugeteilt werden. Dazu kann ein Zeitvielfachzugriff TDMA, ein Frequenzvielfachzugriff FDMA, ein Codevielfachzugriff CDMA oder eine Kombination aus mehreren dieser Vielfachzugriffsverfahren eingesetzt werden.

Beim FDMA wird das Frequenzband b in mehrere Frequenzkanäle f zerlegt; diese Frequenzkanäle werden durch den Zeitvielfachzugriff TDMA in Zeitschlitze ts aufgeteilt. Die innerhalb eines Zeitschlitzes ts und eines Frequenzkanals f übertragenen Signale können durch verbindungsindividuelle den Daten aufmodulierte Spreizcodes, sogenannte CDMA-Codes cc separiert werden.

Die so entstehenden physikalischen Kanäle werden nach einem festgelegten Schema logischen Kanälen zugeordnet. Bei den logischen Kanälen unterscheidet man grundsätzlich zwei Arten:

Signalisierungskanäle (bzw. Steuerkanäle) zur Übertragung von Signalisierungsinformationen (bzw. Steuerinformationen) und Verkehrskanäle (Traffic Channel TCH) zur Übertragung von Nutzdaten.

Die Signalisierungskanäle werden weiter unterteilt in:

- Broadcast Channels

- Common Control Channels

- Dedicated/Access Control Channel DCCH/ACCH

Zu der Gruppe der Broadcast Channels gehören der Broadcast Control Channel BCCH, durch den die MS funktechnische Informationen vom Basisstationssystem BSS erhält, der Frequency Correction Channel FCCH und der Synchronization Channel SCH. Zu den Common Control Channels gehört der Random Access Channel RACH. Die zur Realisierung dieser logischen Kanäle übertragenen Funkblöcke oder Signalfolgen können dabei für unterschiedliche Zwecke Synchronisationsfolgen K(i) sog. Korrelationsfolgen enthalten, bzw. auf diesen logischen Kanälen können für unterschiedliche Zwecke Synchronisationsfolgen K(i) übertragen werden.

Im folgenden wird beispielhaft ein Verfahren zur Synchronisation einer Mobilstation MS mit einer Basisstation BS erläutert: Während eines ersten Schritts der anfänglichen Basisstationssuche oder Zellensuche (initial cell search procedure) verwendet die Mobilstation den primären Synchronisationskanal (primary synchronisation channel SCH (PSC)), um eine Zeitschlitzsynchronisation mit der stärksten Basisstation zu erreichen. Dies kann durch einen angepaßten Filter (matched filter) oder eine entsprechende Schaltung gewährleistet werden, der an den primären Synchronisationscode cp (Synchronisationsfolge), der von allen Basisstationen ausgesendet wird, angepaßt ist. Dabei wird von allen Basisstationen BS der gleiche primäre Synchronisationscode cp der Länge 256 ausgesendet.

Die Mobilstation ermittelt mittels Korrelation aus einer Empfangsfolge die empfangenen Synchronisationsfolgen K(i). Dabei werden am Ausgang eines angepaßten Filters (matched Filter) für jede empfangene Synchronisationsfolge jeder sich innerhalb des Empfangsbereichs der Mobilstation befindlichen Basisstation Peaks ausgegeben. Die Detektion der Position des stärksten Peaks ermöglicht die Ermittlung des Timings der stärksten Basisstation modulo der Schlitzlänge. Um eine größere Verlässlichkeit zu gewährleisten, kann der Ausgang des angepaßten Filters über die Anzahl der Zeitschlitze nichtkohärent akkumuliert werden. Die Mobilstation führt also eine Korrelation über eine Synchronisationsfolge der Länge 256 Chips als Matched-Filter-Operation durch.

Der Synchronisationscode cp kann dabei entsprechend einer hierarchischen Synchronisationsfolge K(i) bzw. y(i) nach folgenden Beziehungen aus zwei konstituierenden Folgen $x_1$ und $x_2$ der Länge $n_1$ bzw. $n_2$ gebildet sein:

$$y(i) = x_2(i \bmod n_2) * x_1(i \operatorname{div} n_2) \text{ für } i = 0 \ldots (n_1 * n_2) - 1$$

Die konstituierenden Folgen $x_1$ und $x_2$ haben die Länge 16 (d.h. $n_1 = n_2 = 16$) und sind durch folgende Beziehungen definiert:

$$x_1(i) = x_4(i \bmod s + s*(i \operatorname{div} sn_3)) * x_3((i \operatorname{div} s) \bmod n_3), i$$
$$= 0 \ldots (n_3 * n_4) - 1$$

$x_1$ ist also eine verallgemeinerte hierarchische Folge unter Verwendung der obigen Formel, wobei s=2 gewählt wird und die beiden Golayfolgen $x_3$ und $x_4$ als konstituierende Folgen verwendet werden.

$x_2$ wird als die Golayfolge der Länge 16 definiert, die durch die Delaymatrix $D^2 = [8, 4, 1, 2]$ und die Gewichtsmatrix $W^2 = [1, -1, 1, 1]$ gewonnen wird.

$x_3$ und $x_4$ sind identische Golayfolgen der Länge 4 (N = 2), die durch die Delaymatrix $D^3 = D^4 = [1, 2]$ und die Gewichtsmatrix $W^3 = W^4 = [1, 1]$ definiert sind.

Die Golayfolgen werden unter Verwendung der folgenden rekursiven Beziehung definiert:

$$a_0(k) = \delta(k) \text{ und } b_0(k) = \delta(k)$$

$$a_n(k) = a_{n-1}(k) + W_n \cdot b_{n-1}(k - D_n),$$

$$b_n(k) = a_{n-1}(k) - W_n \cdot b_{n-1}(k - D_n),$$

$$k = 0, 1, 2, \ldots, 2^N,$$

$$n = 1, 2, \ldots, N.$$

$a_N$ definiert dann die gewünschte Golayfolge.

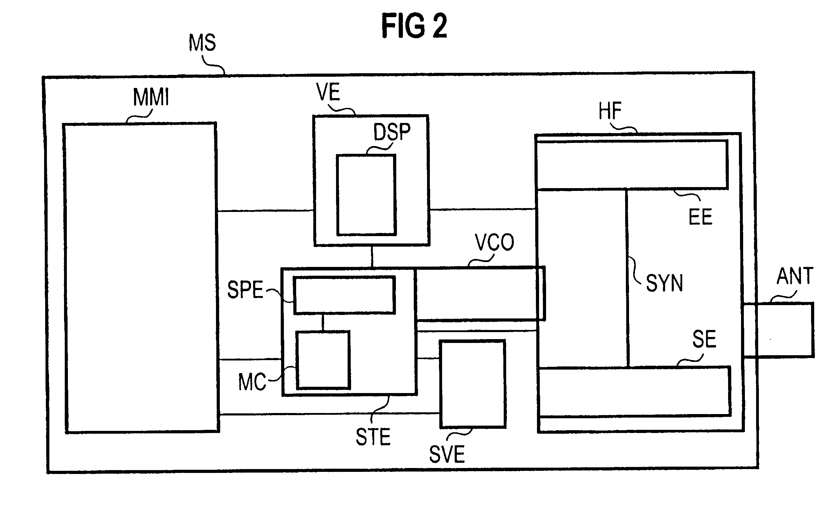

Figur 2 zeigt eine Funkstation, die eine Mobilstation MS sein kann, bestehend aus einer Bedieneinheit oder Interface-Einheit MMI, einer Steuereinrichtung STE, einer Verarbeitungseinrichtung VE, einer Stromversorgungseinrichtung SVE, einer Empfangseinrichtung EE und ggf. einer Sendeeinrichtung SE.

Die Steuereinrichtung STE besteht im wesentlichen aus einem programmgesteuerten Mikrocontroller MC, der schreibend und lesend auf Speicherbausteine SPE zugreifen kann. Der Microcontroler MC steuert und kontrolliert alle wesentlichen Elemente und Funktionen der Funkstation.

Die Verarbeitungseinrichtung VE kann auch durch einen digitalen Signalprozessor DSP gebildet sein, der ebenfalls auf Speicherbausteine SPE zugreifen kann. Durch die Verarbeitungseinrichtung VE können auch Additions- und Multiplikationsmittel realisiert sein.

Der Mikrocontroller MC und/oder der digitalen Signalprozessor DSP und/oder Speichereinrichtungen SPE und/oder weitere einem Fachmann als solche bekannte Rechenelemente können dabei zu einer Prozessoreinrichtung zusammengefaßt werden, welche derart eingerichtet ist, daß die Verfahren gemäß den Ansprüchen 1 bis 12 durchgeführt werden können.

In den flüchtigen oder nicht flüchtigen Speicherbausteinen SPE sind die Programmdaten, die zur Steuerung der Funkstation und des Kommunikationsablaufs, insbesondere auch der Signalisierungsprozeduren, benötigt werden und während der Verarbeitung von Signalen entstehende Informationen gespeichert. Außerdem können darin Synchronisationsfolgen K(i), die zu Korrelationszwecken verwendet werden, und Zwischenergebnisse von Korrelationssummenberechnungen gespeichert werden. Die im Rahmen der Erfindung liegenden Synchronisationsfolgen K(i) können also in der Mobilstation und/oder der Basisstation abgespeichert sein. Es ist auch möglich, daß ein oder mehrere Parameter zur Definition von Synchronisationsfolgen oder daraus abgeleitete Signalteilfolgen oder Signalteilfolgenpaare (K1(j);K2(k)) in der Mobilstation und/oder der Basisstation abgespeichert sind. Es ist auch möglich, daß in der Mobilstation und/oder der Basisstation eine Synchronisationsfolge K(i) aus einem Signalteilfolgenpaar (K1(j);K2(k)) und/oder einem oder mehreren Parametern zur Definition von Synchronisationsfolgen oder daraus abgeleiteten Signalteilfolgen gebildet wird.

Insbesondere kann in einer Basisstation oder in allen Basisstationen eines Systems eine Synchronisationsfolge K(i) abgespeichert sein, die in festen oder variablen Abständen zu Synchronisationszwecken ausgesendet wird. In der Mobilstation MS sind konstituierende Folgen (Signalteilfolgen) oder Parameter, aus welchen die in der Basisstation abgespeicherte Synchronisationsfolge K(i) bildbar ist oder gebildet werden kann, abgespeichert und werden zur Synchronisation der Mobilstation mit einer Basisstation zur rechenaufwandsgünstigen Korrelationssummenberechnung herangezogen.

Die Speicherung der Synchronisationsfolgen bzw. der Signalteilfolgen oder Parameter kann auch durch eine Speicherung entsprechender Informationen in beliebig codierter Form erfolgen und durch Mittel zur Speicherung, wie beispielsweise flüchtige und/oder nichtflüchtige Speichereinbausteine oder durch entsprechend konfigurierte Addierer- oder Multipliziereingänge oder entsprechende gleichwirkende Hardwareausgestaltungen realisiert sein.

Der Hochfrequenzteil HF besteht ggf. aus der Sendeeinrichtung SE, mit einem Modulator und einem Verstärker V und einer Empfangseinrichtung EE mit einem Demodulator und ebenfalls einem Verstärker. Durch Analog/Digitalwandlung werden die analogen Audiosignale und die analogen von der Empfangseinrichtung EE stammenden Signale in digitale Signale gewandelt und vom digitalen Signalprozessor DSP verarbeitet. Nach der Verarbeitung werden ggf. die digitalen Signale durch Digital/Analogwandlung in analoge Audiosignale oder andere Ausgangssignale und analoge der Sendeeinrichtung SE zuzuführende Signale gewandelt. Dazu wird gegebenenfalls eine Modulation bzw. Demodulation durchgeführt.

Der Sendeeinrichtung SE und der Empfangseinrichtung EE wird über den Synthesizer SYN die Frequenz eines spannungsgeregelten Oszilators VCO zugeführt. Mittels des spannungsgesteuerten Oszilators VCO kann auch der Systemtakt zur Taktung von Prozessoreinrichtungen der Funkstation erzeugt werden.

Zum Empfang und zum Senden von Signalen über die Luftschnittstelle eines Mobilfunksystems ist eine Antenneneinrichtung ANT vorgesehen. Bei einigen bekannten Mobilfunksystemen, wie dem GSM (Global System for Mobile Communication) werden die Signale zeitlich gepulst in sogenannten bursts empfangen und gesendet.

Bei der Funkstation kann es sich auch um eine Basisstation BS handeln. In diesem Fall wird das Lautsprecherelement und das Mikrophonelement der Bedieneinheit MMI durch eine Verbindung zu einem Mobilfunknetz, beispielsweise über einen Basisstationscontroler BSC bzw. eine Vermittlungseinrichtung MSC ersetzt. Um gleichzeitig Daten mit mehreren Mobilstationen MS auszutauschen, verfügt die Basisstation BS über eine entsprechende Vielzahl von Sende- bzw. Empfangseinrichtungen.

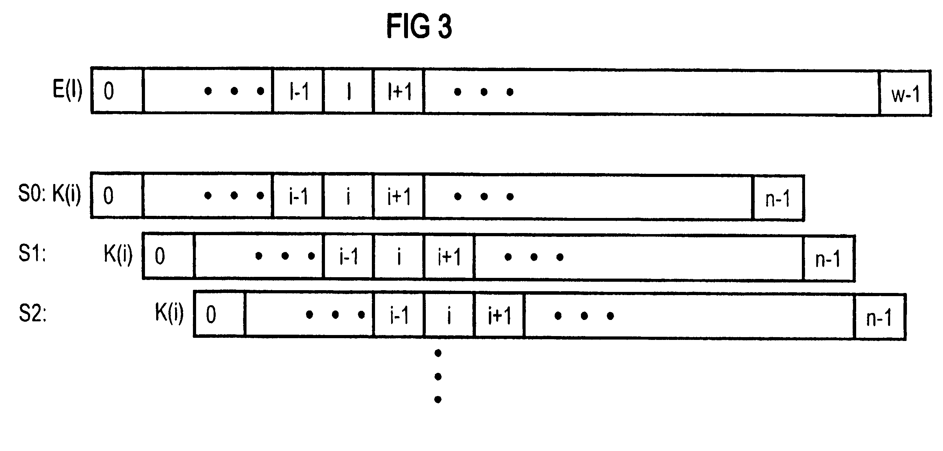

In Figur 3 ist eine Empfangssignalfolge E(l), bei der es sich auch um ein von einem Empfangssignal abgeleitete Signalfolge handeln kann, der Länge w dargestellt. Zur Berechnung einer ersten Korrelationssumme S0 entsprechend eingangs angegebener Formel werden Elemente eines ersten Abschnitts dieser Empfangssignalfolge E(l) paarweise mit den entsprechenden Elementen der Synchronisationsfolge K(i) der Länge n multipliziert, und die Länge der resultierenden Teilergebnisse zur Korrelationssumme S0 aufaddiert.

Zur Berechnung einer weiteren Korrelationssumme S1 wird die Synchronisationsfolge K(i) wie in der Figur bildlich dargestellt um ein Element nach rechts verschoben und die Elemente der Synchronisationsfolge K(i) mit den entsprechenden Elementen der Signalfolge E(l) paarweise multipliziert, und durch eine Summation der entstehenden Teilergebnisse wieder die Korrelationssumme S1 gebildet.

Die paarweise Multiplikation der Elemente der Synchronisationsfolge mit entsprechenden Elementen der Empfangssignalfolge und die anschließende Summation kann auch in Vektorschreibweise als die Bildung eines Skalarproduktes beschrieben werden, sofern man jeweils die Elemente der Synchronisationsfolge und die Elemente der Empfangssignalfolge zu einem Vektor zusammenfaßt:

$$S0 = \begin{pmatrix} K(0) \\ \vdots \\ K(i) \\ \vdots \\ K(n-1) \end{pmatrix} * \begin{pmatrix} E(0) \\ \vdots \\ E(i) \\ \vdots \\ E(n-1) \end{pmatrix} = K(0)*E(0)+...+K(i)*E(i)+...+K(n-1)*E(n-1)$$

$$S1 = \begin{pmatrix} K(0) \\ \vdots \\ K(i) \\ \vdots \\ K(n-1) \end{pmatrix} * \begin{pmatrix} E(1) \\ \vdots \\ E(i+1) \\ \vdots \\ E(n) \end{pmatrix} = K(0)*E(1)+...+K(i)*E(i+1)+...+K(n-1)*E(n)$$

In den so ermittelten Korrelationssummen S kann das Maximum gesucht werden, das Maximum der Korrelationssummen S mit einem vorgegebenen Schwellwert verglichen werden, und so ermittelt werden, ob in dem Empfangssignal E(l) die vorgegebene Synchronisationsfolge K(i) enthalten ist und wenn ja, wo im Empfangssignal E(l) sie sich befindet, und so zwei Funkstationen miteinander synchronisiert werden bzw. Daten, denen ein individueller Spreizcode in Form einer Synchronisationsfolge K(i) aufmoduliert wurde, detektiert werden.

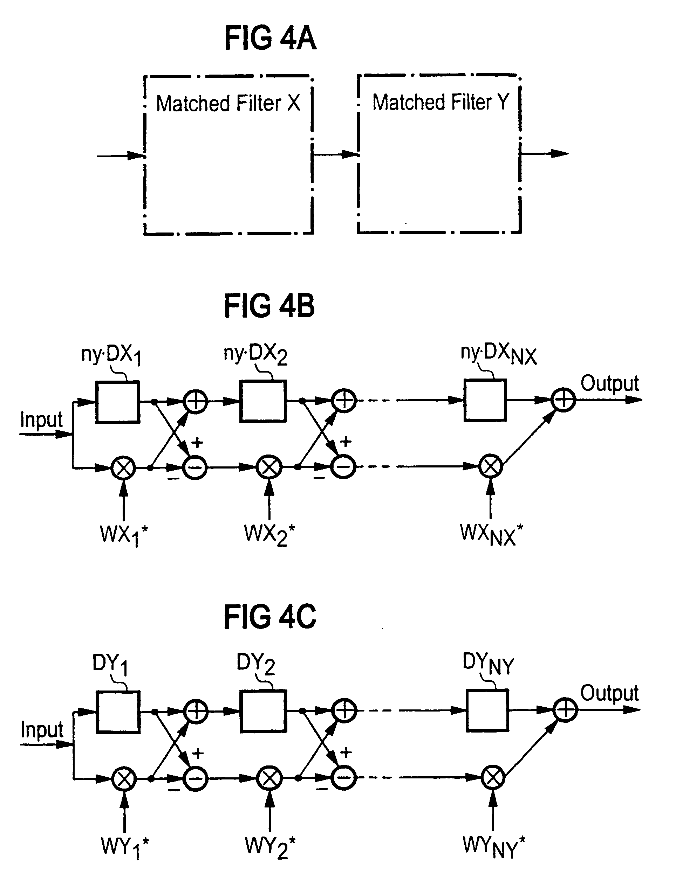

Figur 4 zeigt einen effizienten hierarchischen Korrelator für Synchronisationsfolgen, wobei als konstituierende Folgen K1, K2 Golayfolgen X,Y der Länge nx bzw. ny verwendet werden. Der Korrelator besteht aus zwei hintereinander geschalteten Matched Filtern (Figur 4 a), die jeweils als Efficient-Golay-Korrelatoren gebildet sind. Figur 4 b) zeigt den Matched Filter für die Folge X und Figur 4 c) zeigt den Matched Filter für die Folge Y.

In Figur 4 b) gelten folgende Bezeichnungen:

n =       1, 2, ...$NX$
ny        Länge der Folge Y
nx        Länge der Folge X
NX        mit $n_x = 2^{NX}$
$DX_n$       $DX_n = 2^{pX_n}$
$PX_n$       Permutation der Zahlen {0, 1, 2, ..., NX-1=} für die Signalteilfolge X
$WX_n$       Gewichte für die Signalteilfolge X aus (+1,-1,+i oder -i).

In Figur 4 c) gelten folgende Bezeichnungen:

n =       1, 2, ...NY
ny        Länge der Folge Y
NY        mit $ny = 2^{NY}$
$DY_n$       $DY_n = 2^{PY_n}$
$PY_n$       Permutation der Zahlen {0, 1, 2, ..., $NY$-1} für die Signalteilfolge Y
$WY_n$       Gewichte für die Signalteilfolge Y aus (+1,-1,+i oder -i).

Außerdem gelten in diesen Ausführungsvarianten folgende Definitionen und Bezeichnungen:

$a_n(k)$ und $b_n(k)$ sind zwei komplexe Folgen der Länge $2^N$, $\delta(k)$ ist die Kronecker Delta-Funktion,
k ist eine die Zeit repräsentierende ganze Zahl,
n ist die Iterationsnummer,
$D_n$ ist die Verzögerung,
$P_n$ , $n$ = 1, 2, ..., $N$, ist eine beliebige Permutation der Zahlen {0, 1, 2, ..., $N$-1} ,
$W_n$ können als Gewichte die Werte +1, -1, +i, -i annehmen.

Die Korrelation einer Golaysequenz der länge $2^N$ kann folgendermaßen effizient durchgeführt werden:

Man definiert die Folgen $R_a^{(0)}(k)$ und $R_b^{(0)}(k)$ als $R_a^{(0)}(k) = R_b^{(0)}(k) = r(k)$, wobei r (k) das Empfangssignal oder die Ausgabe einer anderen Korrelationsstufe ist.

Folgender Schritt wird N mal ausgeführt, wobei n von 1 bis N läuft:

Berechne

$$R_a^{(n)}(k) = W_n^* * R_b^{(n-1)}(k) + R_a^{(n-1)}(k - D_n)$$

Und

$$R_b^{(n)}(k) = W_n^* * R_b^{(n-1)}(k) - R_a^{(n-1)}(k - D_n)$$

Dabei bezeichnet $W_n^*$ das konjugiert komplexe zu $W_n$. Falls die Gewichte W reell sind, ist $W_n^*$ identisch zu $W_n$.

$R_a^{(N)}(k)$ ist dann die zu berechnende Korrelationssumme.

Ein Efficient Golay Korrelator für eine Synchronisationsfolge der Länge 256 ($2^8$) Chips im Empfänger weist in der Regel 2*.8-1=15 komplexe Addierer auf.

Mit der Kombination aus Hierarchischer Korrelation und Efficient Golay Korrelator sind für einen Hierarchischen Code - beschrieben durch zwei konstituierende Sequenzen X und Y - der Länge 256 ($2^4$-$2^4$) nur $2·4-1+2·4-1 = 14$ komplexe Addierer erforderlich (auch für den Fall, daß vierwertige konstituierende Folgen eingesetzt werden).

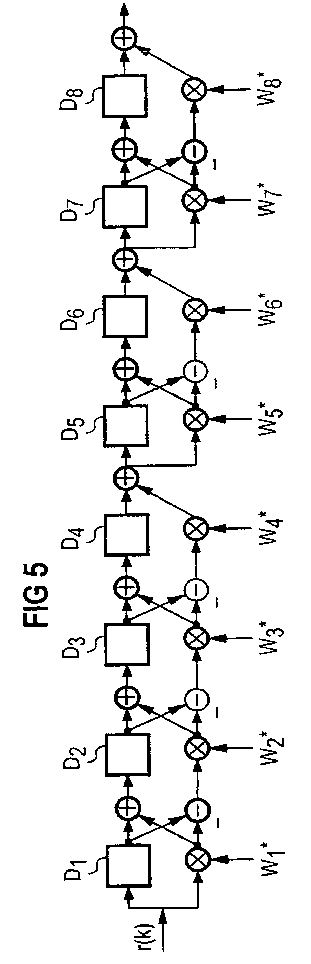

Damit wird der Berechnungsaufwand, der für die primäre Synchronistation in CDMA-Mobilfunksystemen sehr hoch ist, um 7% reduziert, weil effiziente hierarchische Korrelatoren und Golay-Korrelatoren kombiniert werden können. Eine mögliche Implementierung des gesamten Korrelators, ein effizienter abgeschnittenen Golay-Korrelator für verallgemeinerte hierarchische Golayfolgen, ist in Figur 5 gezeigt. Dieser wird auch als abgeschnittener Golay-Korrelator bezeichnet, weil eine der Ausgaben in bestimmten Stufen abgeschnitten wird und statt dessen eine andere Ausgabe als Eingabe für die nächste Stufe verwendet wird.

Der Vektor D ist definiert durch D = [128, 16, 64, 32, 8, 4, 1, 2] und W = [1, -1, 1, 1, 1, 1, 1, 1]. Dieser Korrelator erfordert nur 13 Additionen pro berechneter Korrelationssumme.

Die verallgemeinerte hierarchische Golayfolge bietet im Vergleich zu einer Folge mit einfacher hierarchischer oder golay-gestützter Struktur aufgrund effizienterer Möglichkeiten zur Berechnung der Korrelationssumme mit dieser Golayfolge Vorteile. Simulationen zeigen außerdem auch bei höheren Frequenzfehlern gute Ergebnisse hinsichtlich der Schlitzsynchronisation.

Im folgenden werden die hierarchischen Golayfolgen mit beiden einfachen Verfahren verglichen.

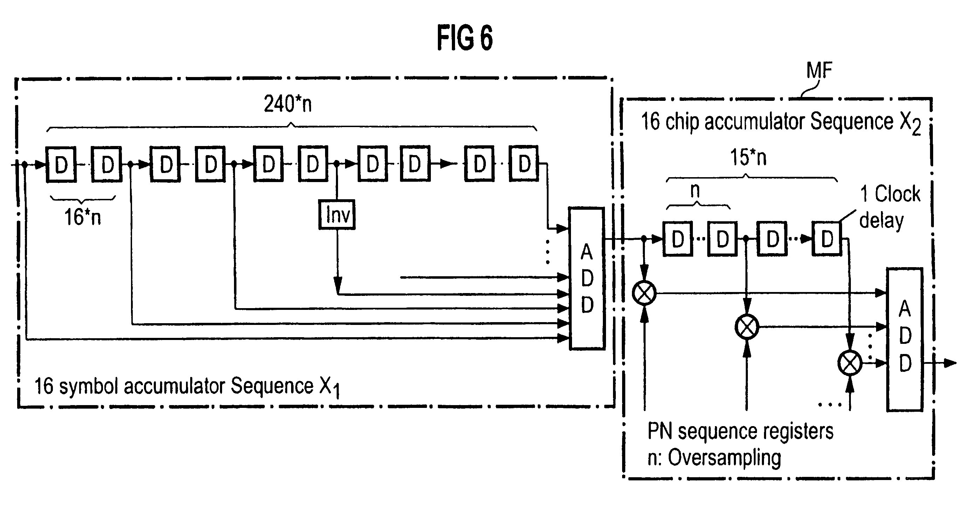

Figur 6 zeigt zunächst einen Effizienten Korrelator für einfache hierarchische Folgen und ein einfaches Korrelationsverfahren für die hierarchische Korrelation.

Die hierarchische Korrelation besteht aus zwei verketteten, angepaßten Filterblöcken, die jeweils eine standardmäßige Korrelation über eine der konstituierenden Folgen durchführen. Es wird angenommen, daß die Korrelation über $X_1$ (16-Symbol-Akkumulation) vor der Korrelation über $X_2$ (16-Chip-Akkumulation) durchgeführt wird. Dies ist eine Implementierungsoption, weil beide angepaßten Filterblöcke (in der Figur 6 in gestrichelten Linien eingeschlossen) lineare Systeme sind, die in einer beliebigen Reihenfolge verbunden werden können. Auf diese Weise können 240*n Delayleitungen mit der minimalen Wortlänge implementiert werden, da vorher keine Akkumulation erfolgt und deshalb kein Signal/Störungs-Gewinn erzielt wird. Dabei bezeichnet n den Oversampling-Faktor, d.h. wie viele Abtastungen pro Chipintervall durchgeführt werden.

Wie bereits erwähnt, können einer oder beide der angepaßten Filterblöcke gegebenenfalls wieder durch einen Korrelator für eine (verallgemeinerte) hierarchische Folge oder durch einen effizienten Golay-Korrelator (EGC) ersetzt werden.

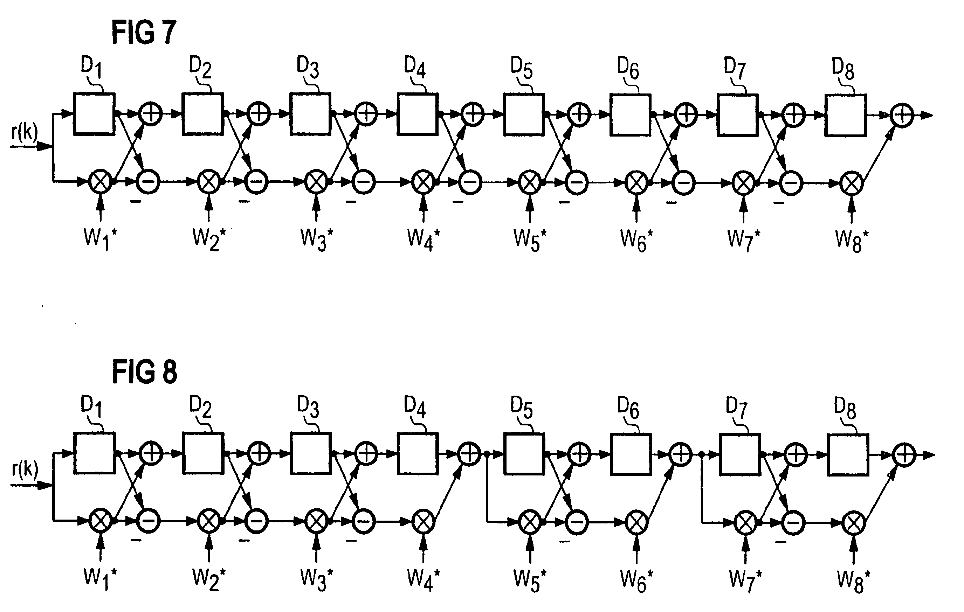

Figur 7 zeigt ein einfaches Korrelationsverfahren für den effizienten Golay-Korrelator (EGC) für eine einfache Golayfolge. Ein effizienter hierarchischer Golay-Korrelator entspricht in seinem Aufbau einem Effizienten Korrelator für einfache hierarchische Folgen (siehe Figur 6) mit der Ausnahme, daß zwei Addierer weggelassen werden können.

Figur 8 zeigt nun einen Effizienten Golay-Korrelator für verallgemeinerte hierarchische Golayfolge. Die Einsparung zweier Addierer von 15 Addiereren verringert offensichtlich die Komplexität des Verfahrens entsprechend.

Figur 9 zeigt Simulationsrgebnisse, wobei der Schlit.zsynchronisationsschritt auf einem einstrahligen Rayleigh-Fading-Kanal mit 3 km/h für verschiedene Chip/Rausch-Verhältnisse (CNR) ohne und mit Frequenzfehler untersucht wurde. Es wird gezeigt, daß der oben definierte Synchronisationscode, im folgenden GHG bezeichnet, gegenüber einem anderen Synchronisationscode, im folgenden $S_{new}$ bezeichnet, hinsichtlich der Schlitzsynchronisationsleistung praktisch gleich gut geeignet ist. Es liegen Ergebnisse für die Verwendung von Mittelwertbildung mit 24 Schlitzen vor. Zusammen mit dem primären Synchronisationskanal (PSC) wird ein sekundärer Synchronisationskanal gesendet, der auf einer zufälligen Auswahl aus 32 Symbolen basiert. Die graphische Darstellung zeigt, daß kein wesentlicher Unterschied zwischen dem Synchronisationscode $S_{new}$ und dem verallgemeinerten hierarchischen Golay- Synchronisationscode GHG für keinen Frequenzfehler und einen Frequenzfehler von 10 kHz besteht.

Die vorgeschlagene Synchronisationsfolge GHG weist insbesondere bei 10 kHz bessere Autokorrelationseigenschaften als $S_{old}$ (gepunktete Kurve) auf. Die graphische Darstellung zeigt, daß die Synchronisationseigenschaften von GHG so bezüglich des praktischen Einsatzes optimal sind. $S_{old}$ ist eine nicht besonders auf Frequenzfehler optimierte hierarchische Korrelationsfolge.

Durch die Verwendung der verallgemeinerten hierarchischen Golayfolgen für den primären Synchronisationskanal (PSC) wird also empfangsseitig die Berechnungskomplexität reduziert; die Komplexität wird gegenüber herkömmlichen Folgen von 30 Additionen bzw. gegenüber Golayfolgen von 15 Additionen pro Ausgabeabtastwert auf nur 13 Additionen reduziert.

Die Simulationen zeigen, daß die vorgeschlagene Synchronisationsfolge GHG sowohl bei niedrigen als auch bei höheren Fehlern gute Synchronisationseigenschaften aufweisen. Aufgrund einer niedrigeren rechnerischen Komplexität ist zur Implementierung weniger spezifische Hardware erforderlich, und es wird ein niedrigerer Stromverbrauch erzielt.

**Patentansprüche**

1. Verfahren zur Synchronisation einer Basisstation (BS) mit einer Mobilstation (MS),
   bei dem eine Synchronisationsfolge y(i) der Länge n von der Basisstation (BS) ausgesendet wird, die gemäß folgender Beziehung aus einer ersten konstituierenden Folge x1 der Länge n1 und einer zweiten konstituierenden Folge x2 der Länge n2 bildbar ist:

$$y(i) = x_2(i \bmod n_2) * x_1(i \mathrm{\ div\ } n_2) \mathrm{\ für\ } i = 0 \ldots (n_1 * n_2) - 1,$$

   wobei zumindest eine konstituierende Folge $x_1$ bzw. $x_2$ gemäß folgender Beziehung aus einer dritten konstituierenden Folge x3 der Länge n3 und einer vierten konstituierenden Folge x4 der Länge n4 bildbar ist:

$$x_1(i) = x_4(i \bmod s + s*(i \mathrm{\ div\ } sn_3)) * x_3((i \mathrm{\ div\ } s) \bmod n_3), i = 0 \ldots (n_3 * n_4) - 1;$$

   bzw.

$$x_2(i) = x_4(i \bmod s + s*(i \mathrm{\ div\ } sn_3)) * x_3((i \mathrm{\ div\ } s) \bmod n_3), i = 0 \ldots (n_3 * n_4) - 1,$$

   wobei der Parameter s den Teil der konstituierenden Folge angibt, der als ein zusammenhängendes Stück wiederholt wird, und wobei gilt: 1 < s < n4.

2. Verfahren nach Anspruch 1, bei dem
   die Synchronisationsfolge y(i) die Länge 256 aufweist, und
   die konstituierenden Folgen x1, x2 die Länge 16 aufweisen.

3. Verfahren nach einem der vorhergehenden Ansprüche, wobei zumindest eine der konstituierenden Folgen x1 bzw.

x2 eine Golaysequenz ist.

**4.** Verfahren nach Anspruch 3, wobei
zumindest eine der beiden konstituierenden Folgen $x_1$ bzw. $x_2$ eine Golaysequenz ist, die auf folgenden Parametern basiert:

Delaymatric $D^1 = [8, 4, 1, 2]$ und Gewichtsmatrix $W^1 = [1, -1, 1, 1]$;
bzw.
Delaymatric $D^2 = [8, 4, 1, 2]$ und Gewichtsmatrix $W^2 = [1, -1, 1, 1]$.

**5.** Verfahren nach einem der vorhergehenden Ansprüche,
bei dem $x_3$ und $x_4$ identische Golaysequenzen der Länge 4 sind und auf folgenden Parametern basieren:

Delaymatric $D^3 = D^4 = [1, 2]$ und Gewichtsmatrix $W^3 = W^4 = [1, 1]$.

**6.** Verfahren nach einem der Ansprüche 3 bis 5, bei dem eine Golaysequenz aN durch folgende rekursive Beziehung definiert ist:

$$a_0(k) = \delta(k) \quad \text{und} \quad b_0(k) = \delta(k)$$

$$a_n(k) = a_{n-1}(k) + W_n \cdot b_{n-1}(k-D_n) \; ,$$

$$b_n(k) = a_{n-1}(k) - W_n \cdot b_{n-1}(k-D_n) \; ,$$

$$k = 0, 1, 2, \ldots, 2^N,$$

$$n = 1, 2, \ldots, N,$$

$\delta(k)$ Kroneckersche Deltafunktion

**7.** Verfahren nach einem der vorhergehenden Ansprüche,
bei dem die Synchronisationsfolge y(i) von einer Mobilstation empfangen wird und zu Synchronisationszwecken verarbeitet wird.

**8.** Verfahren nach einem der vorhergehenden Ansprüche,
bei dem
in der Mobilstation (MS) zur Ermittlung einer in einer Empfangssignalfolge E(l) enthaltenen vorgegebenen Synchronisationsfolge y(i) Korrelationssummen S der Synchronisationsfolge y(i) mit entsprechenden Abschnitten der Empfangssignalfolge E(l) bestimmt werden.

**9.** Verfahren nach Anspruch 8,
bei dem zur Bestimmung zumindest einer Korrelationssumme S zumindest ein Efficient Golay Correlator (EGC) verwendet wird.

**10.** Basisstation (BS),
die derart eingerichtet ist, dass sie zur Synchronisation zwischen der Basisstation (BS) und einer Mobilstation (MS) eine Synchronisationsfolge aussendet, die gemäß folgender Beziehung aus einer ersten konstituierenden Folge x1 der Länge n1 und einer zweiten konstituierenden Folge x2 der Länge n2 bildbar ist:

$$y(i) = x_2(i \bmod n_2) * x_1(i \dim n_2) \text{ für } i = 0 \ldots (n_1 * n_2) - 1,$$

wobei zumindest eine konstituierende Folge $x_1$ bzw. $x_2$ gemäß folgender Beziehung aus einer dritten konstituierenden Folge x3 der Länge n3 und einer vierten konstituierenden Folge x04 der Länge n4 bildbar ist:

$$x_1(i) = x_4(i \bmod s + s*(i \dim sn_3)) * x_3((i \dim s) \bmod n_3), i = 0 \ldots (n_3 * n_4) - 1;$$

bzw.

$$x_2(i) = x_4(i \bmod s + s*(i \dim sn_3)) * x_3((i \dim s) \bmod n_3), i = 0 \ldots (n_3 * n_4) - 1,$$

wobei der Parameter s den Teil der konstituierenden Folge angibt, der als ein zusammenhängendes Stück wiederholt wird, und wobei gilt: $1 < s < n4$,
und mit Mitteln zur Aussendung dieser Synchronisationsfolge y(i) zum Zwecke der Synchronisation mit einer Empfangseinheit (MS) .

**11.** Mobilstation (MS),
die derart eingerichtet ist, dass sie zur Synchronisation zwischen einer Basisstation (BS) und der Mobilstation (MS) eine Synchronisationsfolge ermittelt, die **dadurch** erhältlich ist, daß sie gemäß folgender Beziehung aus einer ersten konstituierenden Folge x1 der Länge n1 und einer zweiten konstituierenden Folge x2 der Länge n2 bildbar ist:

$$y(i) = x_2(i \bmod n_2) * x_1(i \dim n_2) \text{ für } i = 0 \ldots (n_1 * n_2) - 1,$$

wobei zumindest eine konstituierende Folge $x_1$ bzw. $x_2$ gemäß folgender Beziehung aus einer dritten konstituierenden Folge x3 der Länge n3 und einer vierten konstituierenden Folge x4 der Länge n4 bildbar ist:

$$x_1(i) = x_4(i \bmod s + s*(i \dim sn_3)) * x_3((i \dim s) \bmod n_3), i = 0 \ldots (n_3 * n_4) - 1;$$

bzw.

$$x_2(i) = x_4(i \bmod s + s*(i \dim sn_3)) * x_3((i \dim s) \bmod n_3), i = 0 \ldots (n_3 * n_4) - 1, \text{ wobei der Parameter s den Teil der}$$

konstituierenden Folge angibt, der als ein zusammenhängendes Stück wiederholt wird, und wobei gilt: $1 < s < n4$.

**12.** Mobilstation (MS) nach Anspruch 11
mit zumindest einem Efficient Golay Korrelator zur Ermittlung der Synchronisationsfolge y(i).

**13.** Mobilstation (MS) nach einem der Ansprüche 11 oder 12

mit zwei hintereinander geschalteten Matched Filtern, die als Efficient Golay Korrelatoren ausgebildet sind zur Ermittlung der Synchronisationsfolge y(i) .

**Revendications**

1.  Procédé de synchronisation d'une station de base (BS) avec une station mobile (MS),
    dans lequel une séquence de synchronisation y(i) de longueur n est émise par la station de base (BS), qui peut être formée à partir d'une première séquence constitutive x1 de longueur n1 et d'une deuxième séquence constitutive x2 de longueur n2 selon la relation suivante:

    $$y(i) = x_2 \ (i \ \text{mod} \ n_2) \ * \ x_1 \ (i \ \text{div} \ n_2) \ \text{pour} \ \ i = 0 \ \dots \ (n_1 * n_2) - 1,$$

    au moins une séquence constitutive $x_1$ resp. $x_2$ pouvant être formée à partir d'une troisième séquence constitutive x3 de longueur n3 et d'une quatrième séquence constitutive x4 de longueur n4 selon la relation suivante :

    $$x_1(i) = x_4(i \ \text{mod} \ s + s*(i \ \text{div} \ sn_3)) \ * \ x_3((i \ \text{div} \ s) \ \text{mod} \ n_3), \ i$$
    $$= 0 \ \dots \ (n_3 * n_4) - 1;$$

    resp.

    $$x_2(i) = x_4(i \ \text{mod} \ s + s*(i \ \text{div} \ sn_3)) \ * \ x_3((i \ \text{div} \ s) \ \text{mod} \ n_3), \ i$$
    $$= 0 \ \dots \ (n_3 * n_4) - 1,$$

    le paramètre s indiquant la partie de la séquence constitutive, qui est répétée en tant que fraction cohérente, et 1 < s < n4.

2.  Procédé selon la revendication 1, dans lequel
    la séquence de synchronisation y(i) présente la longueur 256 et les séquences constitutives x1, x2 présentent la longueur 16.

3.  Procédé selon l'une quelconque des revendications précédentes, au moins une des séquences constitutives x1 resp. x2 étant une séquence de Golay.

4.  Procédé selon la revendication 3,
    au moins une des séquences constitutives $x_1$ resp. $x_2$ étant une séquence de Golay qui est basée sur les paramètres suivants :

    matrice de retard $D^1$ = [8, 4, 1, 2] et matrice de pondération $W^1$ = [1, -1, 1, 1];
    resp.
    matrice de retard $D^2$ = [8, 4, 1, 2] et matrice de pondération $W^2$ = [1, -1, 1, 1].

5.  Procédé selon l'une quelconque des revendications précédentes, dans lequel $x_3$ et $x_4$ sont des séquences de Golay identiques de longueur 4 et sont basés sur les paramètres suivants :

    matrice de retard $D^3$ = $D^4$ = [1, 2] et matrice de pondération $W^3$ = $W^4$ = [1, 1].

6.  Procédé selon l'une quelconque des revendications 3 à 5, dans lequel une séquence de Golay $a_N$ est définie par la relation récursive suivante :

$$a_0(k) = \delta(k) \text{ et } b_0(k) = \delta(k)$$

$$a_n(k) = a_{n-1}(k) + W_n \cdot b_{n-1}(k-D_n),$$

$$b_n(k) = a_{n-1}(k) - W_n \cdot b_{n-1}(k-D_n),$$

$$k = 0, 1, 2, \ldots, 2^N,$$

$$n = 1, 2, \ldots, N,$$

$\delta(k)$ fonction de Kronecker.

7. Procédé selon l'une quelconque des revendications précédentes, dans lequel la séquence de synchronisation y(i) est reçue par une station mobile et est traitée à des fins de synchronisation.

8. Procédé selon l'une quelconque des revendications précédentes, dans lequel des sommes de corrélation S de la séquence de synchronisation y(i) sont déterminées dans la station mobile (MS) avec des sections correspondantes de la séquence de signaux de réception E(1) pour déterminer une séquence de synchronisation y(i) prédéfinie contenue dans une séquence de signaux de réception E(1).

9. Procédé selon la revendication 8, dans lequel au moins un Efficient Golay Correlator (EGC) est utilisé pour déterminer au moins une somme de corrélations S.

10. Station de base (BS), qui est configurée de telle manière qu'elle émet une séquence de synchronisation pour la synchronisation entre la station de base (BS) et une station mobile (MS), cette séquence de synchronisation pouvant être formée à partir d'une première séquence constitutive x1 de longueur n1 et d'une deuxième séquence constitutive x2 de longueur n2 selon la relation suivante :

$$y(i) = x_2 (i \bmod n2) * x_1 (i \operatorname{div} n2) \text{ pour } i = 0 \ldots (n1*n2) - 1,$$

au moins une séquence constitutive $x_1$ resp. $x_2$ pouvant être formée à partir d'une troisième séquence constitutive x3 de longueur n3 et d'une quatrième séquence constitutive x4 de longueur n4 selon la relation suivante :

$$x_1(i) = x_4(i \bmod s + s*(i \text{ div } sn_3)) * x_3((i \text{ div } s) \bmod n_3), i = 0 \ldots (n_3* n_4) - 1;$$

resp.

$$x_2(i) = x_4(i \bmod s + s*(i \text{ div } sn_3)) * x_3((i \text{ div } s) \bmod n_3), i = 0 \ldots (n_3* n_4) - 1,$$

le paramètre s indiquant la partie de la séquence constitutive, qui est répétée en tant que fraction cohérente, et 1 < s < n4,
et comprenant des moyens pour émettre cette séquence de synchronisation y(i) dans le but de la synchronisation avec une unité de réception (MS).

11. Station mobile (MS)
qui est configurée de telle manière qu'elle détermine une séquence de synchronisation pour la synchronisation entre une station de base (BS) et la station mobile (MS), cette séquence de synchronisation pouvant être obtenue du fait qu'elle peut être formée à partir d'une première séquence constitutive x1 de longueur n1 et d'une deuxième séquence constitutive x2 de longueur n2 selon la relation suivante : $y(i) = x_2$ (i mod n2) * $x_1$ (i div n2) pour i = 0 ... (n1*n2) - 1, au moins une séquence constitutive $x_1$ resp. $x_2$ pouvant être formée à partir d'une troisième séquence constitutive x3 de longueur n3 et d'une quatrième séquence constitutive x4 de longueur n4 selon la relation suivante :

$$x_1(i) = x_4(i \bmod s + s*(i \text{ div } sn_3)) * x_3((i \text{ div } s) \bmod n_3), i = 0 \ldots (n_3* n_4) - 1;$$

resp.

$$x_2(i) = x_4(i \bmod s + s*(i \text{ div } sn_3)) * x_3((i \text{ div } s) \bmod n_3), i = 0 \ldots (n_3* n_4) - 1,$$

le paramètre s indiquant la partie de la séquence constitutive, qui est répétée en tant que fraction cohérente, et 1 < s < n4.

12. Station mobile (MS) selon la revendication 11,
comprenant au moins un Efficient Golay Correlator pour déterminer la séquence de synchronisation y(i).

13. Station mobile (MS) selon l'une quelconque des revendications 11 ou 12, comprenant deux Matched Filters couplés en série, qui sont formés comme des Efficient Golay Correlators pour déterminer la séquence de synchronisation y(i).

**Claims**

1. Method for synchronizing a base station (BS) with a mobile station (MS), in which the base station (BS) emits a synchronization sequence y(i) of length n which can be formed in accordance with the following relationship from a first constituent sequence x1 of length n1 and a second constituent sequence x2 of length n2:

$$y(i) = x_2(i \bmod n_2) * x_1(i \bmod n_2) \text{ for } i = 0 \ldots (n_1 * n_2) - 1,$$

it being possible to form at least one constituent sequence $x_1$ or $x_2$ in accordance with the following relationship from a third constituent sequence x3 of length n3 and a fourth constituent sequence x4 of length n4:

$$x_1(i) = x_4(i \bmod s + s*(i \bmod sn_3)) * x_3((i \bmod s) \bmod n_3),$$
$$i = 0 \ldots (n_3 * n_4) - 1;$$

or

$$x_2(i) = x_4(i \bmod s + s*(i \bmod sn_3)) * x_3((i \bmod s) \bmod n_3),$$
$$i = 0 \ldots (n_3 * n_4) - 1,$$

the parameter s specifying the part of the constituent sequence which is repeated as a coherent piece, and the following applying: 1 < s < n4.

2. Method according to Claim 1, in which the synchronization sequence y(i) is of length 256, and the constituent sequences x1, x2 are of length 16.

3. Method according to one of the preceding claims, in which at least one of the constituent sequences x1 or x2 is a Golay sequence.

4. Method according to Claim 3, in which at least one of the two constituent sequences $x_1$ or $x_2$ is a Golay sequence which is based on the following parameters:

   delay matrix $D^1$ = [8, 4, 1,2] and weight matrix $W^1$ = [1, -1, 1,1];
   or
   delay matrix $D^2$ = [8, 4, 1,2] and weight matrix $W^2$ = [1, -1, 1,1].

5. Method according to one of the preceding claims, in which $x_3$ and $x_4$ are identical Golay sequences of length 4 and are based on the following parameters:

   delay matrix $D^3$ = $D^4$ = [1, 2] and weight matrix $W^3$ = $W^4$ = [1,1].

6. Method according to one of Claims 3 to 5, in which a Golay sequence $a_N$ is defined by the following recursive relationship:

$$a_0(k) = \delta(k) \text{ and } b_0(k) = \delta(k)$$

$$a_n(k) = a_{n-1}(k) + W_n \cdot b_{n-1}(k-D_n),$$

$$b_n(k) = a_{n-1}(k) - W_n \cdot b_{n-1}(k-D_n),$$

$$k = 0, 1, 2, \ldots, 2^N,$$

$$n = 1, 2, \ldots, N,$$

$\delta$ (k) Kronecker delta function

7. Method according to one of the preceding claims, in which the synchronization sequence y(i) is received by a mobile station and processed for synchronization purposes.

8. Method according to one of the preceding claims, in which in order to determine a prescribed synchronization sequence y(i) contained in a received signal sequence E(l), correlation sums S of the synchronization sequence y(i) are determined in the mobile station (MS) with the aid of corresponding sections of the received signal sequence E(l).

9. Method according to Claim 8, in which at least one efficient Golay correlator (EGC) is used to determine at least one correlation sum S.

10. Base station (BS), which is set up such that it emits a synchronization sequence for synchronization between the base station (BS) and a mobile station (MS), which synchronization sequence can be formed in accordance with the following relationship from a first constituent sequence x1 of length n1 and a second constituent sequence x2 of length n2:

$$y(i) = x_2(i \bmod n_2) * x_1(i \text{ div } n_2) \text{ for } i = 0 \ldots (n_1 * n_2) - 1,$$

it being possible to form at least one constituent sequence $x_1$ or $x_2$ in accordance with the following relationship from a third constituent sequence x3 of length n3 and a fourth constituent sequence x4 of length n4:

$$x_1(i) = x_4(i \bmod s + s*(i \text{ div } sn_3)) * x_3((i \text{ div } s) \bmod n_3),$$
$$i = 0 \ldots (n_3 * n_4) - 1;$$

or

$$x_2(i) = x_4(i \bmod s + s*(i \text{ div } sn_3)) * x_3((i \text{ div } s) \bmod n_3),$$
$$i = 0 \ldots (n_3 * n_4) - 1,$$

the parameter s specifying the part of the constituent sequence which is repeated as a coherent piece, and the following applying : $1 < s < n4$,
and having means for emitting this synchronization sequence y(i) for the purpose of synchronization with a receiving unit (MS).

11. Mobile station (MS), which is set up such that it determines a synchronization sequence for synchronization between a base station (BS) and the mobile station (MS), which synchronization sequence is obtainable in that it can be formed in accordance with the following relationship from a first constituent sequence x1 of length n1 and a second constituent sequence x2 of length n2:

$$y(i) = x_2(i \bmod n_2) * x_1(i \text{ div } n_2) \text{ for } i = 0 \ldots (n_1 * n_2) - 1,$$

it being possible to form at least one constituent sequence $x_1$ or $x_2$ in accordance with the following relationship from a third constituent sequence x3 of length n3 and a fourth constituent sequence x4 of length n4:

$$x_1(i) = x_4(i \bmod s + s*(i \text{ div } sn_3)) * x_3((i \text{ div } s) \bmod n_3),$$
$$i = 0 \ldots (n_3 * n_4) - 1;$$

or

$$x_2(i) = x_4(i \bmod s + s*(i \text{ div } sn_3)) * x_3((i \text{ div } s) \bmod n_3),$$
$$i = 0 \ldots (n_3 * n_4) - 1,$$

the parameter s specifying the part of the constituent sequence which is repeated as a coherent piece, and the following applying: 1 < s < n4.

12. Mobile station (MS) according to Claim 11, having at least one efficient Golay correlator for determining the synchronization sequence y(i).

13. Mobile station (MS) according to one of Claims 11 or 12, having two series-connected matched filters which are designed as efficient Golay correlators for the purpose of determining the synchronization sequence y(i).

FIG 1

# FIG 2

EP 1 173 943 B1

# FIG 3

E(l)  | 0 | · · · | l-1 | l | l+1 | · · · | w-1 |

S0: K(i)  | 0 | · · · | i-1 | i | i+1 | · · · | n-1 |

S1:  K(i)  | 0 | · · · | i-1 | i | i+1 | · · · | n-1 |

S2:  K(i)  | 0 | · · · | i-1 | i | i+1 | · · · | n-1 |

EP 1 173 943 B1

# FIG 4A

| Matched Filter X | Matched Filter Y |

# FIG 4B

$ny \cdot DX_1$  $ny \cdot DX_2$  $ny \cdot DX_{NX}$

Input

Output

$WX_1^*$  $WX_2^*$  $WX_{NX}^*$

# FIG 4C

$DY_1$  $DY_2$  $DY_{NY}$

Input

Output

$WY_1^*$  $WY_2^*$  $WY_{NY}^*$

FIG 5

EP 1 173 943 B1

# FIG 6

240*n

16*n

Inv

A
D
D

16 symbol accumulator Sequence $X_1$

MF

16 chip accumulator Sequence $X_2$

15*n

n

1 Clock delay

A
D
D

PN sequence registers
n: Oversampling

EP 1 173 943 B1

FIG 7

FIG 8

FIG 9

Probability of incorrect slot synchronization